# DEMANDE DE BREVET EUROPEEN

(11) **EP 3 933 787 A1**
(43) Date de publication de la demande: **05.01.2022**
(21) Numéro de dépôt: 20183708.5
(22) Date de dépôt: 02.07.2020
(51) Int. Cl.: G07C 1/24

(54) **SYSTEME DE JUGEMENT OU DÉTERMINATION DE POSITION SUR UNE LIGNE DE PASSAGE D'UNE COMPÉTITION SPORTIVE, ET PROCÉDÉ POUR SA MISE EN ACTION**

(71) Demandeur: Swiss Timing Ltd, 2606 Corgémont (CH)
(72) Inventeur: BLONDEAU, Fabien, 2054 Chézard-St-Martin (CH); GRASSO, Christophe, 2503 Bienne (CH); COSANDIER, Benoit, 2300 La Chaux-de-Fonds (CH); POINTET, Stéphane, 2732 Reconvilier (CH)
(74) Mandataire: ICB SA

(57) **Abrégé**

Le système (1) de jugement ou détermination de position ou posture, et/ou d'un temps sur une ligne de passage (2) d'au moins un compétiteur ou coureur (P1, P2, P3) dans une compétition sportive, comprend au moins :
- un appareil (10) de prise de vue au passage d'une ligne intermédiaire ou d'une ligne d'arrivée de la compétition, l'image de type photofinish prise définissant une entrée du système, et
- une unité de traitement (3) reliée à l'appareil de prise de vue pour combiner l'image photofinish reçue avec un traitement d'un algorithme en utilisant l'intelligence artificielle pour le placement automatique d'un ou plusieurs curseurs sur l'image photofinish.

## Description

### Domaine de l'invention

L'invention concerne un système de jugement ou détermination automatique de position ou posture, et/ou d'un temps sur une ligne de passage d'au moins un compétiteur ou coureur dans une compétition sportive.

L'invention concerne également un procédé de mise en action ou programmation du système de jugement ou détermination de position ou posture, et/ou d'un temps d'au moins un compétiteur ou coureur dans une compétition sportive.

### Arrière-plan de l'invention

Le chronométrage par image photofinish est bien connu dans le chronométrage sportif et est le principal dispositif utilisé pour mesurer indiscutablement la performance temporelle des athlètes ou compétiteurs et leur classement dans des disciplines sportives, telles que l'athlétisme, le cyclisme, l'aviron et bien d'autres disciplines. Bien que cette technologie présente de nombreux avantages, tels que la représentation visuelle dans le temps, où l'axe horizontal est le temps, le positionnement des curseurs sur l'image prise est une opération manuelle, qui nécessite un opérateur et du temps pour réaliser cette opération. Le positionnement horizontal précis des curseurs est une activité critique, car il définit le temps et le rang du ou des athlètes. Ainsi, le positionnement manuel ou semi-manuel des curseurs nécessite du temps et un opérateur, ce qui ralentit le processus pour fournir des résultats et nécessite donc de la main-d'œuvre et dépend de la performance de l'opérateur, ce qui constitue un inconvénient.

La demande de brevet WO 2019/079818 A1 décrit un système et un procédé de reconnaissance d'images ou photographies pour entrer un athlète ou compétiteur dans une compétition sportive. Pour ce faire, le système comprend un appareil photo configuré pour prendre une image ou photographie de l'athlète, qui débute sa compétition sportive. Il est prévu également une base de données de l'athlète configurée pour enregistrer un profil d'image de l'athlète avant le début de la compétition et un processeur (ordinateur) configuré pour comparer le profil de l'image enregistrée dans la base de données avec une image ou photo de l'athlète prise par l'appareil photo. Le processeur entre l'athlète en tant que participant dans la compétition sportive sur la base de la comparaison entre le profil d'image et l'image du début de la compétition. L'athlète peut être facilement reconnu, comme pour une reconnaissance par vision par un ordinateur en fonction de différents paramètres de l'athlète précédemment mémorisés. Cependant, il n'est pas décrit la détermination normalement d'un rang ou un temps de course de chaque compétiteur à l'arrivée ou en des positions intermédiaires durant la course et de manière continue en temps réel, ou le placement automatique d'un curseur sur une ligne de passage.

La demande de brevet WO 2014/089306 A1 décrit un système susceptible de prendre des informations ciblées, qui sont générées pour un participant lors d'une activité sportive. Chaque image ou vidéo, qui représente le participant, est reçue, et le participant est identifié dans l'image ou la vidéo à partir d'un profil de participant stocké électroniquement dans une base de données d'informations sur les participants du système. Le profil du participant comprend des informations d'identification sur le participant et des informations de contact pour le participant. La base de données d'informations sur les participants comprend des profils de participants pour une pluralité de participants pour l'activité sportive. Un ou plusieurs indices d'identification associés à chaque participant sont identifiés dans l'image ou la vidéo, et un ensemble d'informations ciblées est généré sur la base des informations d'identification dans le profil du participant et du ou des indices d'identification identifiés. L'ensemble d'informations ciblées est fourni au participant à l'aide des informations de contact du profil du participant. Cependant, le système se focalise exclusivement sur la reconnaissance de personnes, qui peut être utilisé pour de la production vidéo automatique, mais pas pour une même approche de la reconnaissance de postures physiologiques de tel ou tel participant pour l'identifier précisément afin de placer précisément un curseur sur telle ou telle ligne de passage, notamment sur la bonne ligne de temps verticale d'une prise d'images par exemple à l'arrivée de manière à déterminer précisément en temps réel le classement de chaque participant.

La demande de brevet WO 2015/193049 A1 décrit un système de chronométrage pour mesurer automatiquement notamment les temps intermédiaires et/ou d'arrivée des concurrents pendant une course. Il comprend une caméra de prise de vue (photofinish en terminologie anglaise), et centrée sur une ligne d'arrivée ou une ligne intermédiaire, et une unité de commande pour activer la capture d'images de balayage de ligne par ladite caméra, où des marqueurs optiques sont fournis et respectivement associés à chaque concurrent. Le système de chronométrage comprend encore un module de détection pour détecter automatiquement lesdits marqueurs optiques, ce qui permet d'identifier chaque concurrent et d'attribuer un résultat de chronométrage à chaque concurrent. Cependant, il doit être prévu l'utilisation de marqueurs optiques pour une détection de lumière au passage de chaque ligne, ce qui complique inévitablement tout traitement de données pour pouvoir indiquer en continu et en temps réel le rang de chaque participant associé à un temps de course.

### Résumé de l'invention

L'invention a donc pour but de pallier les inconvénients de l'état de la technique susmentionné en proposant un système de jugement ou détermination automatique de position ou posture, et/ou d'un temps sur une ligne de passage d'au moins un compétiteur ou coureur dans une compétition sportive, permettant de fournir toutes les informations en temps réel sur toute ligne de passage durant la course.

A cet effet, l'invention concerne un système de jugement ou détermination automatique de position ou posture, et/ou d'un temps sur une ligne de passage d'au moins un compétiteur ou coureur dans une compétition sportive, comprenant les caractéristiques définies dans la revendication indépendante 1.

Des formes d'exécution particulières du système de jugement ou détermination automatique de position ou posture, et/ou d'un temps sur une ligne de passage d'au moins un compétiteur ou coureur dans une compétition sportive, sont définies dans les revendications dépendantes 2 à 10.

Un avantage du système de jugement ou détermination automatique réside dans le fait qu'il permet par l'intelligence artificielle de reconnaître chaque compétiteur ou coureur par différents paramètres physiologiques mémorisés dans une unité mémoire d'ordinateur. De manière générale, l'identification de la posture de chaque compétiteur et spécifiquement la détection et la position précise de l'élément déterminant (torse, première partie du corps) pour le jugement de la photofinish sont effectuées automatiquement grâce à un programme d'apprentissage automatique ou profond exécutant un modèle d'intelligence artificielle constitué d'un réseau de neurones.

Avantageusement, il y a un placement automatique d'un curseur au niveau d'une ligne de passage, telle que la ligne d'arrivée. Cela permet de gagner beaucoup de temps par rapport à un positionnement manuel ou semi-manuel des curseurs d'auparavant. Avec le placement automatique du curseur, il est possible d'indiquer en temps réel le rang de chaque compétiteur durant la course et principalement au passage de la ligne d'arrivée.

Avantageusement, il est utilisé une technologie basée sur une vision par ordinateur et à l'aide de l'intelligence artificielle, ce qui permet de reconnaître automatiquement chaque participant au passage de chaque ligne de passage afin de déterminer en temps réel et en continu le classement durant une course. Chaque participant ou compétiteur peut être une personne, un animal, une personne dans ou sur un véhicule, tel qu'un vélo, une voiture, un bateau, ou autre.

Avantageusement, avec l'utilisation de l'intelligence artificielle pour la reconnaissance de chaque compétiteur, il n'est plus nécessaire d'utiliser un module à transpondeur porté par chaque compétiteur pour l'identifier au passage de chaque ligne de passage. Ainsi, il est plus facile de déterminer automatiquement et en temps réel le temps et le rang de chacun au passage d'une ligne de passage durant la compétition sportive. La compétition sportive peut être une course d'athlétisme, une course à vélo ou en bateau, une course automobile, une course de chevaux, une course de ski ou ski de fond, une course de chiens ou d'autres animaux, ou d'autres compétitions où un ou plusieurs participants partent en même temps depuis une ligne de départ. Avec un seul participant ou athlète au départ, la reconnaissance de l'athlète n'est pas nécessaire, mais l'identification de la posture de l'athlète pour le placement automatique d'un curseur sur une ligne de passage par exemple reste pertinente.

Avantageusement et contrairement aux activités habituelles de reconnaissance d'images en X et Y par l'intelligence artificielle, pour cette présente invention, il y a principalement des reconnaissances de chaque athlète dans les images photofinish dépendant du temps t et de l'axe Y.

A cet effet, l'invention concerne aussi un procédé de jugement ou de détermination automatique de position ou posture, et/ou d'un temps sur une ligne de passage d'au moins un compétiteur ou coureur dans une compétition sportive, comprenant les caractéristiques définies dans la revendication indépendante 11.

Des étapes particulières du procédé sont définies dans des revendications dépendantes 12 à 17.

Avantageusement pour le procédé de jugement ou de détermination, il peut être effectué tout d'abord une détection de la posture du compétiteur ou coureur de manière à identifier l'endroit du corps ou du véhicule sur lequel il faut placer le curseur automatiquement par l'intelligence artificielle. Par la suite, la position du curseur donne directement le temps précis du passage de la ligne de passage, telle que la ligne d'arrivée, où l'axe horizontal représente le temps. De plus en fonction des règles du sport pratiqué, la position précise du curseur, qui donne le temps, permet d'établir un classement en temps réel.

Avantageusement suite aux précédentes étapes décrites ci-dessus par exemple, une identification ou reconnaissance de chaque participant ou compétiteur peut être effectuée, mais il s'agit d'une fonction indépendante.

A cet effet, l'invention concerne aussi un programme d'ordinateur, qui comprend des instructions de code de programme pour l'exécution des étapes du procédé, lorsque ledit programme est exécuté par une unité de traitement du système, comme dans la revendication indépendante 18.

### Brève description des dessins

Les buts, avantages et caractéristiques du système ou procédé de jugement ou détermination automatique d'une position ou posture, et/ou d'un temps de chaque participant selon l'invention apparaîtront mieux dans la description suivante d'au moins une forme d'exécution non limitative illustrée par les dessins sur lesquels :
la figure 1 représente de manière simplifiée une première forme d'exécution d'un système de jugement ou détermination automatique de position ou posture, et/ou d'un temps selon l'invention,
la figure 2 représente les différents composants d'un appareil de prise de vue et d'une unité de traitement du système simplifié de jugement ou détermination automatique de position ou posture, et/ou d'un temps selon l'invention, et
les figures 3a et 3b représentent une vue de coureurs dans une course de vélo avec indication du rang de chaque coureur avant le passage de la ligne d'arrivée d'un système de jugement ou détermination automatique de position ou posture, et/ou d'un temps selon l'invention.

### Description détaillée de l'invention

Dans la description suivante, tous les éléments d'un système de jugement ou détermination automatique d'une position ou posture, et/ou d'un temps de course sur une ligne de passage de chaque compétiteur d'une compétition sportive, qui sont bien connus de l'homme du métier dans ce domaine technique, ne seront relatés que de manière simplifiée.

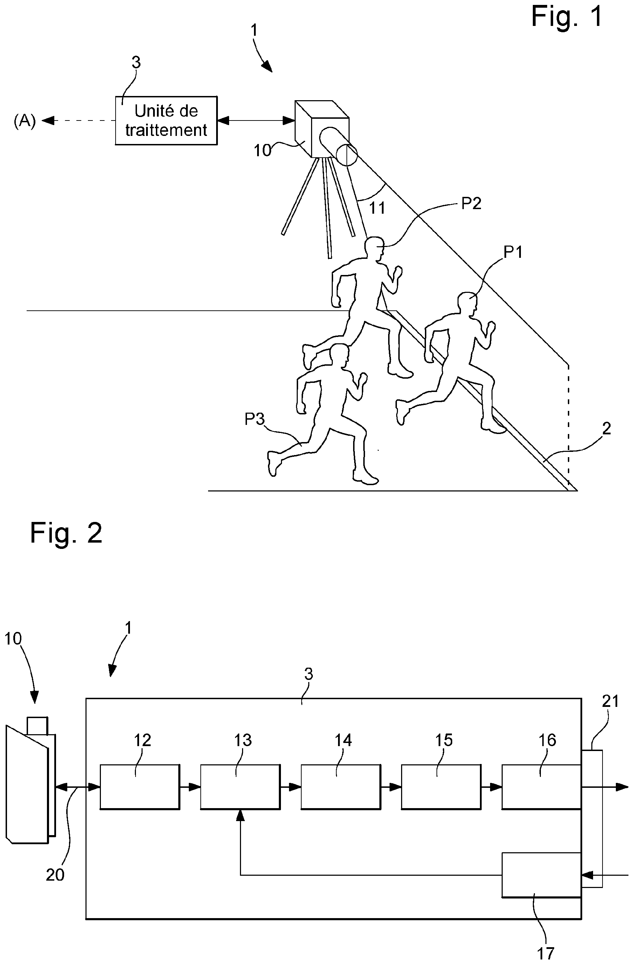

Comme il peut être vu de manière simplifiée à la figure 1, le système 1 de jugement ou détermination de position ou posture, et/ou d'un temps de participants P1, P2, P3 à la compétition sportive comprend essentiellement au moins un appareil 10 de prise de vue et une unité de traitement 3 reliée à l'appareil 10 de prise de vue. Une communication de données ou d'images ou de paramètres de configuration peut être établie entre l'appareil 10 de prise de vue et l'unité de traitement 3. L'unité de traitement 3 comprend notamment un processeur d'images ou un microprocesseur et au moins une mémoire expliquée ci-après. L'unité de traitement 3 peut être aussi un ordinateur avec toutes ses fonctionnalités.

Tout d'abord et principalement, le système 1 ou le procédé permet à une unité de traitement 3 d'être configurée pour mettre en oeuvre un modèle de placement automatique d'un ou plusieurs curseurs sur l'image photofinish reçue par l'appareil 10 de prise de vue. Ce modèle de placement automatique est généré ou développé à partir d'un ou plusieurs algorithmes d'apprentissage qui sont le résultat de l'intelligence artificielle.

L'invention concerne un procédé de jugement automatique basé sur l'apprentissage automatique, ainsi que la vision par ordinateur (aussi appelée vision artificielle ou vision numérique), une branche de l'intelligence artificielle dont le principal but est de permettre à une machine d'analyser, traiter et comprendre une ou plusieurs images prises par un système d'acquisition. Le procédé de jugement automatique est appliqué sur les images acquises par photofinish qui représentent le temps sur l'axe horizontal X, alors que les axes Y et Z définissent l'espace.

L'apprentissage automatique consiste dans un premier temps à estimer un modèle à partir de données, appelées observations, qui sont disponibles et en nombre fini, lors de la phase de conception du système. L'estimation du modèle consiste à déterminer la position sur une ligne de passage de compétiteurs ou coureurs dans une compétition sportive. Cette phase dite « d'apprentissage » ou « d'entraînement » est réalisée préalablement à l'utilisation pratique du modèle. La seconde phase correspond à la mise en production : le modèle étant déterminé, de nouvelles données peuvent alors être soumises afin d'obtenir le résultat correspondant à la tâche souhaitée. En pratique, le système peut poursuivre l'apprentissage une fois en production, dans la mesure où il peut obtenir un retour sur la qualité des résultats produits.

Dans le cas de la présente invention pour la phase d'apprentissage ou d'entraînement, un grand nombre d'images photofinish sont déjà jugées et validées par les fédérations internationales, ce qui facilite la tâche de reconnaissance ou d'identification des participants à une course. De plus, cela facilite également et en tout premier point, le placement automatique du ou des curseurs sur une ligne de passage.

Grâce à cette vision par ordinateur, il est possible de reconnaître l'athlète ainsi que sa posture dans les images d'arrivée photofinish. Toutes ces informations peuvent être données de manière quasi instantanée, ce qui n'était pas le cas auparavant, où ces tâches étaient faites manuellement. Ainsi, il est possible d'indiquer automatiquement le rang de chaque compétiteur ou coureur au passage de la ligne d'arrivée 2, et de ce fait aussi le temps de course de chaque compétiteur P1, P2, P3.

Plusieurs images successives classiques peuvent aussi être prises par l'appareil 10 de prise de vue, qui peut être une caméra intelligente (Smart camera en terminologie anglaise), et mémorisées de manière à indiquer successivement le rang de chaque compétiteur au passage de la ligne d'arrivée 2. Bien entendu comme expliqué par la suite, le système peut comprendre un autre appareil 10 de prise de vue disposé sur une autre ligne de passage, telle qu'une ligne de passage intermédiaire, mais le principe est le même que pour celui de la ligne d'arrivée 2.

On peut définir de manière simplifiée l'intelligence artificielle comme le fait tout d'abord d'observer un objet ou une personne ou un animal en des points spécifiques de leur corps en prenant une ou plusieurs images. Par la suite au moyen d'un algorithme ou plutôt d'un modèle spécifique mémorisé dans l'unité de traitement 3 par exemple, une analyse de la ou des images prises est effectuée en les numérisant ou en les pondérant en poids selon l'importance des points spécifiques. Finalement, une interprétation du résultat est effectuée, de telle manière qu'après plusieurs apprentissages, il est possible de reconnaître ou identifier l'objet, la personne ou l'animal, ce qui est recherché. Plus il y a d'étapes d'apprentissage effectuées, et plus le processeur d'images de l'unité de traitement 3 est à même d'interpréter et de reconnaître précisément l'objet ou la personne P1, P2, P3 ou l'animal.

La notion d'intelligence artificielle regroupe entre autre l'apprentissage automatique ou l'apprentissage profond. Notamment, on parle préférablement de modèle pour définir un ou plusieurs algorithmes d'apprentissage

Pour ce faire, le ou les algorithmes d'apprentissage spécifiques sont entraînés sur la base de classes prédéterminées et d'exemples connus propres à une discipline ou un sport. On parle alors d'apprentissage supervisé (ou d'analyse discriminante) dans la mesure où le système apprend à classer selon un modèle de classification ou de classement. Un expert (ou oracle) doit préalablement étiqueter des exemples. Le processus se passe en deux phases. Lors de la première phase (hors ligne, dite d'apprentissage), il s'agit de déterminer un modèle à partir des données étiquetées. La seconde phase (en ligne, dite de test) consiste à prédire l'étiquette d'une nouvelle donnée, connaissant le modèle préalablement appris.

Il est encore à noter qu'auparavant pour la détermination d'un temps au passage d'une ligne de passage pour chaque compétiteur, il était nécessaire d'utiliser un module à transpondeur disposé sur le corps de chaque compétiteur ou sur le vélo du compétiteur ou sur le cheval du compétiteur. Ce module à transpondeur fournissait des instants de passage de chaque ligne de passage. Avec l'utilisation de l'intelligence artificielle, il y a une mise en activité d'un processeur d'images ou microprocesseur dans l'unité de traitement 3 afin de fournir automatiquement et en temps réel une position ou posture et/ou un temps de course de chaque compétiteur au passage d'une ligne de passage 2.

Cette invention peut potentiellement être utilisée comme service informatique dans les nuages (cloud computing en terminologie anglaise) en envoyant des images d'arrivée photofinish et recevoir en retour l'image jugée avec les curseurs précisément positionnés, ainsi que les temps et des rangs selon les règles de la discipline sportive. Potentiellement n'importe quel chronométreur pourrait utiliser n'importe quel type de caméra photofinish compatible et envoyer les images acquises à un service central.

Il est possible aussi de déterminer en temps réel une position ou posture d'au moins un compétiteur P1, P2, P3 au passage d'une ligne de passage 2 en identifiant ou reconnaissant automatiquement chaque compétiteur suite à différents paramètres mémorisés dans un service informatique dans les nuages.

A l'avenir, il peut encore être envisagé d'utiliser directement comme appareil 10 de prise de vue, une caméra ou appareil photographique 2D pour obtenir cette photo d'arrivée, étant donné la résolution temporelle (ou nombre d'images par seconde) de tels appareils qui va devenir de plus en plus élevée.

Comme précédemment mentionné, avant toute compétition sportive, il peut être envisagé de prendre plusieurs photographies de chaque compétiteur en prélevant certains paramètres de ceux-ci, tels que la position de leur dossard, le mouvement de leur tête, des épaules, des pieds, des genoux en fonction du sport en question. Ceci permet d'entraîner le système de jugement et lui permettre de reconnaître directement par la suite chaque compétiteur par ces informations préenregistrées (intelligence artificielle).

Comme illustré plus en détail à la figure 2, le système 1 de jugement ou détermination de position ou d'un temps de chaque compétiteur ou coureur P1, P2, P3, comprend l'appareil 10 de prise de vue, qui peut être au moins une unité à caméra 10, relié à l'unité de traitement 3 qui est à processeur d'images. L'unité de traitement 3 à processeur d'images reçoit une séquence d'images via l'entrée d'images 20 de l'appareil 10 de prise de vue. L'entrée d'images 20 est connectée à une mémoire tampon d'images 12 du processeur d'images 3. Cette mémoire tampon d'images 12 est généralement mise en oeuvre comme une sorte de stockage de données numériques. Il est envisageable aussi d'avoir l'appareil 10 de prise de vue, qui fournit une sortie numérique 20 au processeur d'images 3 afin de fournir un flux de données numériques comprenant la séquence d'images. La sortie de la mémoire tampon d'images 12 est connectée à une entrée d'une unité gestionnaire de données 13. L'unité gestionnaire de données 13 est opérable pour gérer les données numériques stockées dans et/ou fournies par la mémoire tampon d'images 12. Une sortie de l'unité gestionnaire de données 13 est connectée à un préprocesseur d'images 14. Le préprocesseur d'images 14 est utilisable pour exécuter un certain type de prétraitement d'images prédéfini selon la mise en fonction d'un algorithme de traitement de l'intelligence artificielle. Une sortie du préprocesseur d'images 14 est connectée à une unité de reconnaissance ou d'identification 15, qui lui-même peut fournir un signal de données à une sortie 16 de l'unité de traitement 3 et via un transducteur 21.

Il est à noter que l'unité gestionnaire de données 13 peut comprendre une entrée supplémentaire reliée éventuellement à une entrée de données 17 du processeur d'images 3 d'un éventuel branchement dans un réseau d'unités de traitement à processeur d'images. Cependant selon la présente invention, chaque unité de traitement 3 à processeur d'images gère de manière indépendante à d'autres unités connectées le jugement ou détermination d'une position ou posture, et/ou d'un temps de chaque compétiteur pour le placement automatique d'un curseur sur une ligne de passage spécifique. L'unité gestionnaire de données 13 peut être opérable pour gérer ou combiner les données numériques stockées dans et/ou fournies par la mémoire tampon d'images 12 en combinaison avec les données spécifiques arrivées via l'entrée de données 17. Selon la présente invention, il peut être imaginé d'avoir deux caméras comme appareils 10 de prise de vue, qui sont disposées de chaque côté d'une même ligne de passage, telle que la ligne d'arrivée et en étant les deux synchronisées en temps. Cela procure l'avantage de fournir toujours une information précise même si l'une ou l'autre des caméras devient défectueuse.

Il est à noter que cela permet également et surtout d'avoir une autre vue pour faire le jugement (positionnement du curseur) en se basant sur deux vues différentes gauche et droite temporellement synchronisées. Dans certaines situations, par exemple en athlétisme, un athlète peut être partiellement « caché » par un autre sur une caméra, alors qu'il sera entièrement visible sur l'autre caméra.

La combinaison du préprocesseur d'images 14 et de l'unité de reconnaissance ou d'identification 15 est opérable pour effectuer au moins une classification d'images, de détection d'un élément, tel qu'un objet, une personne ou un animal, ou d'une segmentation sémantique ou estimation de l'élément reconnu dans la séquence d'images reçues. La reconnaissance de l'unité 15 est utilisable pour générer des données spécifiques à l'élément, telles que sa position, son orientation, sa posture, l'état de son mouvement ou sa trajectoire d'intérêt reconnu dans la séquence d'images. L'unité de reconnaissance ou d'identification 15 est en outre connectée à la sortie de données du transducteur 21. Cependant toutes les données ou paramètres de reconnaissance ou d'identification notamment d'une personne ou d'un animal sont mémorisés dans l'unité de traitement 3 dans une mémoire spécifique non représentée et dans laquelle un algorithme de traitement de l'intelligence artificielle est aussi mémorisé.

Il est à noter que s'il est nécessaire d'avoir plusieurs unités de traitement 3 à processeur d'images pour un contrôle sur plusieurs lignes de passage, chaque unité de traitement 3 à processeur d'images peut être reliée en réseau jusqu'à un processeur central non représenté pour transmettre des signaux de données A. La description ci-dessus n'a bien entendu été présentée que pour le principe d'une unité de traitement 3 communicant par une entrée 20 des signaux de configuration de l'appareil 10 de prise de vue ou recevant des signaux d'images par exemple numérisées provenant de l'appareil 10 de prise de vue.

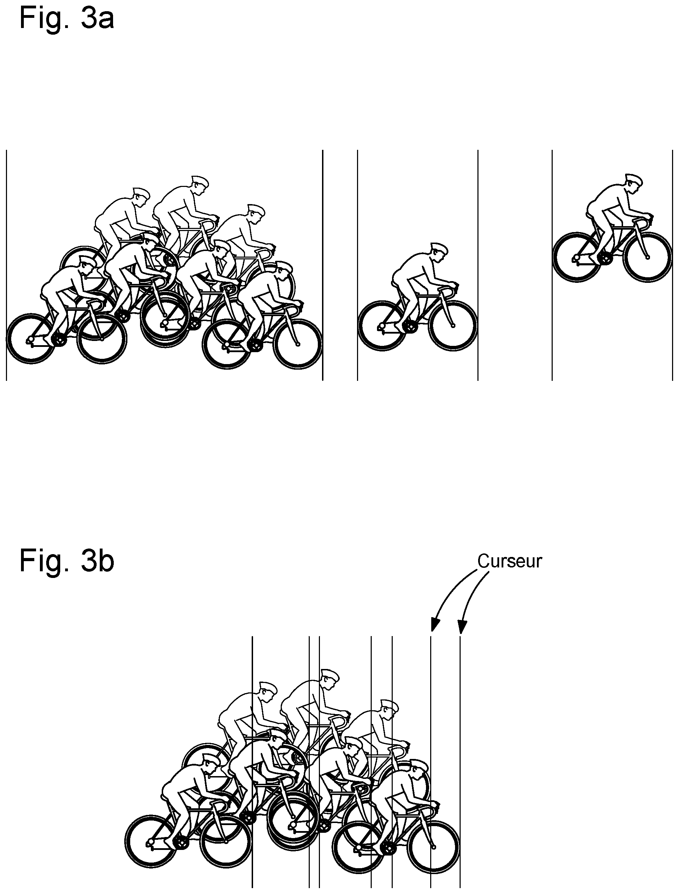

Les figures 3a et 3b représentent une course de vélo sur route. Sans représenter une ligne de passage, on peut considérer qu'à l'arrivée de la course et en fonction du nombre de cyclistes à proximité l'un de l'autre arrivant en même temps, une photo à l'arrivée est prise par l'appareil de prise de vue non représenté comme une image photofinish. Une photo ou vidéo est donc prise à l'arrivée pour déterminer précisément le rang de chaque cycliste à l'arrivée, étant donné que l'œil humain n'est pas en mesure de discriminer quel cycliste ou compétiteur a traversé la ligne d'arrivée en premier. La prise d'images sur la ligne de passage avec la colonne à pixels est pour observer un endroit précis pour déterminer le temps de course et le rang de chaque compétiteur. Le temps à l'arrivée par cette prise d'images à réseau de colonnes à pixels est le temps final officiel pour une compétition.

Normalement, une ou plusieurs photos de chronométrage photofinish (t, Y) au niveau de la ligne d'arrivée sont encore utilisées dans d'autres courses sportives comme celle de la course de vélo sur route représentée ici. Même avec tout type d'équipement électronique pour pister ou suivre les coureurs ou les compétiteurs durant la compétition sportive, une photo à l'arrivée est considérée comme nécessaire pour déterminer le vainqueur. Des photos sont également spécialement importantes durant des courses, mais elles sont aussi utilisées pour assigner des temps officiels à chaque compétiteur durant n'importent quelle course. Dans une course cycliste sur route traditionnelle, des lignes de jugement sont placées généralement manuellement pour chaque coureur. Cela prend un temps moyen de 2,5 secondes pour faire cela, il en résulte un temps approximativement de 8 minutes pour juger un peloton de course. L'union internationale cycliste définit des règles spéciales pour des courses sur route comme tous les cyclistes du même groupe obtiennent le même temps à l'arrivée.

Grâce au système de jugement ou détermination automatique de position et/ou d'un temps de la présente invention, le système permet de mettre à jour un classement général au passage de la ligne d'arrivée aussi vite que possible en automatisant toutes les tâches qui sont couramment faites manuellement. Ainsi, le système de jugement ou détermination automatique doit détecter le premier cycliste, qui passe la ligne d'arrivée en prenant en compte le passage de l'avant de la roue avant. Il doit aussi être détecté l'arrière de la roue arrière du dernier cycliste des différents groupes. Avec ces données, il est effectué un calcul de l'intervalle temporel entre les cyclistes, pour déterminer si un cycliste donné est le premier d'un nouveau groupe pour obtenir ainsi un nouveau temps comme représenté par les trois groupes à la figure 3a. Finalement, le système doit pouvoir définir les groupes détectés. Dans ce cas de figure, il peut être envisagé de munir les cyclistes également chacun d'un module à transpondeur personnalisé pour donner la composition du groupe.

En utilisant l'intelligence artificielle comme expliqué ci-dessus et suite à l'apprentissage par renforcement ou connaissances de paramètres mémorisés caractérisant chaque cycliste, le système peut détecter automatiquement le numéro du chaque cycliste se trouvant à l'arrière de son dos au passage de la ligne d'arrivée. Dans ce cas de figure, aucun module à transpondeur n'est nécessaire, ce qui simplifie bien la tâche de détermination ou jugement de la position de chacun à l'arrivée. Il doit détecter, comme expliqué ci-dessus, la roue avant de chaque cycliste au passage de la ligne d'arrivée. Avec toutes ces données, le système doit être capable de donner automatiquement les résultats complets de l'étape, c'est-à-dire le temps, la composition des groupes avec la position de chaque cycliste dans chaque groupe.

Il peut être envisagé d'utiliser pour le système, deux appareils de prise de vue non représentés, qui sont par exemple deux caméras photofinish balayant les images séquentiellement sur une largeur d'un pixel de la ligne d'arrivée. Les deux caméras sont disposées de chaque côté de la ligne d'arrivée en étant les deux synchronisées en temps. Une seule unité de traitement peut être en mesure de prendre en compte les images fournies par les deux caméras en utilisant l'intelligence artificielle pour la reconnaissance de chaque cycliste passant la ligne d'arrivée.

Comme une simple colonne de la caméra CCD est lue en sortie associée à un temps, les taux de cadres de chaque caméra peuvent être très hauts par exemple plus haut que 10 000 cadres par seconde. La taille verticale de la colonne d'image est par exemple de 2048 pixels. La qualité de l'image peut être variable (luminosité, contraste). La direction de la course peut être de gauche à droite ou de droite à gauche, ce qui est pris en compte par le système de jugement ou de détermination. Si des modules à transpondeur sont encore utilisés en plus pour cette course cycliste, ils sont considérés comme moyens traditionnels de reconnaissance, mais ne sont pas forcément nécessaires pour le système de la présente invention, qui utilise l'intelligence artificielle pour la reconnaissance de chaque cycliste.

Pour les autres coureurs, seulement leur ordre à l'arrivée est important. Le système utilisé doit être en mesure de juger en temps réel aussitôt quand le premier cycliste passe la ligne d'arrivée et ensuite plus rapidement qu'un chronométreur photofinish expérimenté. Cependant pendant la course, le chronométrage restera la tâche du chronométreur traditionnel.

Dans le système de la présente invention, ledit système reçoit la photo avec la colonne de pixels de l'arrivée, et par la suite il y a une reconstruction de l'image pour reconnaître tous les cyclistes passant la ligne. C'est la roue avant qui fait foi pour déterminer le temps à l'arrivée.

Pour prédire la position d'un cycliste dans une image, il doit y avoir un apprentissage par la machine ou par l'ordinateur de différentes caractéristiques de chaque coureur, par exemple différents points de leur corps les caractérisant leur numéro de dossard, ou autre caractéristique. Une plate-forme est utilisée pour annoter manuellement les images de références afin de constituer un ensemble de données qui sert ensuite à entraîner un modèle d'intelligence artificielle de la présente invention.

Le modèle de détection d'objet spécifique au cyclisme est entraîné avec l'ensemble de données spécifique au cyclisme. La performance d'un modèle de détection dépend du nombre d'images annotées (idéalement plusieurs dizaines ou centaines de milliers de références), de la richesse des cas de figures spécifiques à une application et de la qualité des annotations. Comme susmentionné, une fois la détection automatique effectuée, un logiciel de détermination place le curseur sur la ligne de passage en fonction des règles du sport en question.

A partir de la description qui vient d'être faite, plusieurs variantes du système de jugement ou de détermination d'une position ou posture et/ou d'un temps de compétiteur dans une compétition sportive d'une compétition sportive peuvent être imaginées. Il peut être prévu deux appareils de prise de vue disposés de chaque côté d'une même ligne de passage, et fournissant des images à une seule unité de traitement, telle qu'un ordinateur gérant les images de chaque appareil de prise de vue.

## Revendications

1. Système (1) de jugement ou détermination de position ou posture, et/ou d'un temps sur une ligne de passage (2) d'au moins un compétiteur ou coureur (P1, P2, P3) dans une compétition sportive, **caractérisé en ce qu'**il comprend au moins :
- un appareil (10) de prise de vue au passage d'une ligne intermédiaire ou d'une ligne d'arrivée (2) de la compétition, au moins une image de type photofinish prise définissant une entrée du système, et
- une unité de traitement (3) reliée à l'appareil (10) de prise de vue, et configurée pour mettre en œuvre un modèle de placement automatique d'un ou plusieurs curseurs sur l'image photofinish reçue.

2. Système (1) selon la revendication 1, **caractérisé en ce qu'**il permet de déterminer en temps réel une position ou posture d'au moins un compétiteur (P1, P2, P3) au passage d'une ligne de passage (2) de manière à identifier notamment l'endroit du corps ou d'un véhicule dans ou sur lequel se trouve le compétiteur, pour être en mesure de placer le curseur automatiquement par l'intelligence artificielle.

3. Système (1) selon la revendication 2, **caractérisé en ce qu'**il permet d'identifier ou reconnaître automatiquement chaque compétiteur (P1, P2, P3) suite à différents paramètres mémorisés dans au moins une mémoire de l'unité de traitement (3) et/ou suite à un apprentissage par renforcement par reconnaissance d'images de l'intelligence artificielle.

4. Système (1) selon la revendication 2 pour une compétition sportive avec plusieurs compétiteurs ou coureurs (P1, P2, P3), **caractérisé en ce qu'**il permet de déterminer en temps réel une position, telle qu'un rang de chaque compétiteur au passage d'une ligne de passage (2).

5. Système (1) selon la revendication 1, **caractérisé en ce qu'**il permet d'effectuer le placement automatique d'un ou plusieurs curseurs dans un service informatique dans les nuages.

6. Système (1) selon la revendication 1, **caractérisé en ce qu'**il permet de déterminer en temps réel une position ou posture d'au moins un compétiteur (P1, P2, P3) au passage d'une ligne de passage (2) en identifiant ou reconnaissant automatiquement chaque compétiteur suite à différents paramètres mémorisés dans un service informatique dans les nuages.

7. Système (1) selon la revendication 1, **caractérisé en ce que** l'unité de traitement (3) à processeur d'images comprend une mémoire tampon d'images (12) pour recevoir une séquence d'images de l'appareil (10) de prise de vue via une entrée (20), une unité gestionnaire de données (13) reliée à une sortie de la mémoire tampon d'images (12), un préprocesseur d'image (14) pour effectuer un prétraitement d'images prédéfini selon la mise en fonction d'un algorithme de traitement de l'intelligence artificielle, et relié à une sortie de l'unité gestionnaire de données (13), une unité de reconnaissance ou d'identification (15) relié à une sortie du préprocesseur d'images (14), et pour fournir un signal de données à une sortie (16) de l'unité de traitement (3).

8. Système (1) selon la revendication 7, **caractérisé en ce que** la mémoire tampon d'images (12) est mise en œuvre comme une sorte de stockage de données numériques d'images numérisées depuis l'appareil (10) de prise de vue.

9. Système (1) selon la revendication 7, **caractérisé en ce que** l'unité gestionnaire de données (13) comprend une entrée supplémentaire reliée à une entrée de données (17) dans un branchement d'un réseau de plusieurs unités de traitement (3) à processeur d'images.

10. Système (1) selon la revendication 7, **caractérisé en ce qu'**il comprend plusieurs unités de traitement (3) à processeur d'images pour un contrôle sur plusieurs lignes de passage, les unités de traitement étant reliées en réseau jusqu'à un processeur central.

11. Procédé de jugement ou détermination de position ou posture, et/ou d'un temps sur une ligne de passage (2) d'au moins un compétiteur ou coureur (P1, P2, P3) dans une compétition sportive pour la mise en action du système (1) selon l'une des revendications précédentes, le procédé comprenant les étapes de :
- prendre au moins une image de type photofinish par un appareil (10) de prise de vue au passage d'une ligne intermédiaire ou d'une ligne d'arrivée (2) de la compétition, et
- recevoir par une unité de traitement (3) d'au moins une image prise par l'appareil (10) de prise de vue
- mise en œuvre par l'unité de traitement (3) d'un modèle de placement automatique d'un ou plusieurs curseurs sur l'image photofinish reçue.

12. Procédé selon la revendication 11, **caractérisé en ce qu'**il est déterminé en temps réel une position ou posture d'au moins un compétiteur (P1, P2, P3) au passage d'une ligne de passage (2) de manière à identifier notamment l'endroit du corps ou d'un véhicule dans ou sur lequel se trouve le compétiteur, pour être en mesure de placer le curseur automatiquement par l'intelligence artificielle.

13. Procédé selon la revendication 12, **caractérisé en ce qu'**il identifie ou reconnaît automatiquement chaque compétiteur (P1, P2, P3) suite à différents paramètres mémorisés dans au moins une mémoire de l'unité de traitement (3) et/ou suite à un apprentissage par renforcement par reconnaissance d'images de l'intelligence artificielle.

14. Procédé selon la revendication 12 pour une compétition sportive avec plusieurs compétiteurs ou coureurs (P1, P2, P3), **caractérisé en ce qu'**il détermine en temps réel une position, telle qu'un rang de chaque compétiteur au passage d'une ligne de passage (2).

15. Procédé selon la revendication 11, **caractérisé en ce qu'**il effectue un placement automatique d'un ou plusieurs curseurs dans un service informatique dans les nuages.

16. Procédé selon la revendication 11, **caractérisé en ce qu'**il détermine en temps réel une position ou posture d'au moins un compétiteur (P1, P2, P3) au passage d'une ligne de passage (2) en identifiant ou reconnaissant automatiquement chaque compétiteur suite à différents paramètres mémorisés dans un service informatique dans les nuages.

17. Procédé selon la revendication 11, **caractérisé en ce qu'**il est utilisé un réseau de neurones dans l'intelligence artificielle où les données prélevées avec leur propre étiquette sont la base d'un apprentissage par le réseau de neurones pour reconnaître différentes catégories ou types de compétition.

18. Programme d'ordinateur comprenant des instructions de code de programme pour l'exécution des étapes du procédé selon l'une quelconque des revendications 11 à 17, lorsque ledit programme est exécuté par une unité de traitement (3) du système (1).
